# EUROPEAN PATENT APPLICATION

(11) **EP 4 575 850 A1**
(43) Date of publication of application: **25.06.2025**
(21) Application number: 23217414.4
(22) Date of filing: 18.12.2023
(51) Int. Cl.: G06F 21/36, G06Q 10/08, G06Q 10/087, H04W 4/80

(54) **VISUAL SHUTTLE IDENTIFICATION**

(71) Applicant: MOVU, 9160 Lokeren (BE)
(72) Inventor: BASHESKI, Jordan, 9080 Lochristi (BE)
(74) Representative: IP HILLS NV

(57) **Abstract**

A status reporting system providing a user a means to identify a shuttle to which he has physical access by means displaying an identifier on a low-power display. The status reporting system additionally intends to provide a user the possibility to retrieve a detailed status report on a client device by means of providing a machine-readable code on the low-power display and that comprises a wireless connection path to a digital report that is stored an a web report hosting means for retrieval by the client device.

## Description

### Field of the Invention

The present invention generally relates to robotic shuttles in an automated warehouse, and more specifically to the visual identification of the robotic shuttles for servicing purposes in the shuttle operating environment. The invention further relates to status reporting or diagnostic information reporting via a wirelessly accessible report that may be referenced by a computer-readable link on an integrated display on the robotic shuttle.

### Background of the Invention

At present, it is common to operate a large numbers of identical robotic shuttles simultaneously an in automated warehouse. In case of a technical breakdown or malfunction of such a shuttle, a human intervention may be required. One of the first steps for troubleshooting the device successfully, is to identify the shuttle properly in order to for instance pull up the service history of the device. It is therefore desirable that the identification of the shuttle can be performed at a glance, and that based on the identification further data about the shuttle can be retrieved.

Because an automated warehouse operates many of these, mostly identical, robotic shuttles at the same time, it is not always easy and straightforward for humans to identify these devices at a glance in case of need. In order to facilitate the identification, it is common to apply for instance an identification code, number or alike on a visible location on the outside cover of each of the devices. Since the robotic shuttle have to be interchangeable per se, they are preferably identified by some kind of serial number that is attributed to each shuttle. In many cases the identification number, name or code is fixedly attributed on the outside cover of the shuttle by means of paint stickering or alike. This practice works under the assumption that the identifiers are unique, and that there is no need to change the identifier during the lifecycle of the device.

Sometimes, it may however be useful to be able to dynamically attribute serial numbers to the shuttles. For instance to allocate certain shuttles to certain closed zones, such that the serialization of the name, number or code have certain meanings, and are not simply random names, numbers or codes. Changing the identifiers or serial numbers of robotic shuttles is under these circumstances a hassle.

### Summary of the Invention

It is an object of the present invention, amongst others, to solve or alleviate the above identified problems and challenges by providing a status reporting system that is configured to display the unique identifier on a screen of the robotic shuttle, and that makes a digital report available through an application on a screen of a client device, such as a handheld device or smartphone.

To this aim and according to a first aspect of the invention, there is provided a status reporting system for a robotic shuttle in an automated warehouse to display a digital report through an application on a screen of a client device, said robotic shuttle having a unique identifier, comprising a processor, configured to collect and analyse status information of said robotic shuttle, to organise said status information into a digital report, and to encode a machine-readable code representing a wireless connection path to said digital report, said machine-readable code being readable by said client device, comprising a wireless connection means, configured to establish a wireless connection with said client device for retrieving by said client device said digital report over said wireless connection path, and to automatically redirect said application to retrieve said digital report for display on said screen of said client device upon establishing said wireless connection, comprising a web report hosting means, configured to make said digital report available over said wireless connection path, and comprising a low-power display, configured to display said machine-readable code representing said wireless connection path for reading by said client device.

A robotic shuttle is a type of autonomous vehicle that is designed to transport goods within an automated warehouse without the need for a human driver. These shuttles are equipped with various sensors, cameras, and other technologies to navigate and interact with their environment, making them capable of operating without direct human control.

Warehouses include relatively large storage structures, generally structured along a plurality of substantially parallel lanes. The storage structures are arranged to provide storage locations to goods, often palletized goods. Said storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse aisles may or may not be provided with tracks. Additionally, lift systems may allow connections between various levels of the storage structure.

Robotic shuttles are often used for short-distance transportation within defined areas, such as these automated warehouses, and they may run in the track system of the storage structures of the warehouse, or they may run on the floor of the warehouse without being constrained to a number of tracks. They are typically electrically powered and can be programmed to follow predetermined routes or respond dynamically to their surroundings. Some robotic shuttles are designed for on-demand services, allowing picking or storing of goods according to a centrally managed logic.

The development and deployment of robotic shuttles are part of the broader field of autonomous or self-driving vehicles, which aims to use technology to enhance transportation efficiency, safety, and accessibility. These vehicles are an example of how automation is being applied to field of logistics to improve mobility and reduce the reliance on traditional human-handled warehousing methods.

In the context of the invention, a wireless connection path is a URL or Uniform Resource Locator, that is a reference or address used to access resources on the network, but that is supplemented with wireless network credentials to first access the wireless network. The wireless connection path thus comprises all information that is required to pull up the digital report. In other words, it is the combination of the access information to the wireless network, such as the Wi-Fi credentials or Bluetooth connection credentials, plus the URL to pull up the report.

The wireless network of the invention may be one of a WLAN, Wireless Local Area Network such as a Wi-Fi network following the IEEE 802.11 standards, a WPAN, Wireless Personal Area Network such as a Bluetooth or Zigbee network, a WWAN, Wireless Wide Area Network such as Cellular networks (3G, 4G, 5G) or alike. In case of a Wi-Fi network, the wireless network credentials are the SSID and password of the network. In case of a Bluetooth network, the wireless network credentials may be the pairing details which are used to encrypt the communication. In case of a Cellular network, the wireless network credentials may be the Authentication Key that may be stored on the SIM card.

The URL that references the network address of the digital report and that is only accessible after connecting to the wireless network, typically comprises a number of elements, such as the scheme that determines the network protocol that is used to access the report, the domain or host serving the report, optionally supplemented with a path or query parameters. More specifically, the wireless connection path is a reference to a resource on the web report hosting means that serves the digital report. The web report hosting means may therefore be a webserver or server serving a different protocol.

The machine readable code that is displayed on the low-power display of the robotic shuttle may be one or a plurality of alphanumeric characters, a barcode or a QR-code. In case of the use of alphanumeric characters, there is an additional advantage that the identification number or code is also human readable. The machine readable code may for instance not only comprise an encoded version of the series of alphanumeric characters, but may for instance also comprise the full wireless connection path.

Further, the wireless network on the side of the status reporting system is established by means of the wireless connection means. The wireless connection means is the network infrastructure that supports the connection of the web report hosting means to the wireless network.

The invention is advantageous in that the status reporting system makes the identification of a shuttle easy and straightforward for humans by means of the low-power display displaying the correct identification number or code, and moreover makes a straightforward access possible to extensive status data by means of displaying a machine-readable code representing the wireless connection path. The status reporting system also ensures that the wireless connection is kept secure and inaccessible for people not having physical access to the robotic shuttles themselves. At least direct visual contact with the low-power display of the robotic shuttle is required to allow the machine readable code to be scanned by the client device.

In a preferred embodiment, the wireless connection path only comprises the credentials that are needed to establish a connection with the wireless network, but no explicit URL that references the network address of the digital report. The requirement for an explicit URL as part of the wireless connection path can be circumvented by implementing various techniques, such as for instance the setup of a captive portal, or the application of certain DHCP and network router settings. These techniques may be implemented at the level of the wireless connection means of the web report hosting means. In these cases, the wireless connection path may be limited to the wireless network credentials only, as any first request by the client device will result in a connection to the specified address of the digital report. This implies that the client automatically connects to a predefined URL provided by the wireless access point or router.

Alternatively, another way to circumvent the requirement to specify an initial URL may be avoided by using a dedicated app on the client device that automatically connects to a stored default URL to which the client will connect automatically upon establishing the wireless connection.

The technical advantage of this feature is that an immediate and configuration free redirection to the status report of the correct shuttle can be achieved. The mere connection to the Wi-Fi access point of the shuttle immediately results in the access to the correct URL storing the digital report of the shuttle. The connection to the correct access point is ensured by providing the correct connection credentials of the wireless connection via the encoded wireless connection path in the machine readable code. Once the client device connects to the wireless connection, the application on the client device is directed to the URL of the digital report.

In another preferred embodiment, the wireless connection path comprises Bluetooth connection credentials. This embodiment provides the advantage that the connection range of the Bluetooth connection is more limited compared to a WiFi connection, which again ensures a further security measure for accessing the digital report. Since a Bluetooth connection only operates at short distances, the network connection to access the digital report can only be established when an operator with a client device is in the vicinity of the robotic shuttle.

In another preferred embodiment, the display is a low-power display which may be for instance an e-ink display. The application of this type of display in this context has the advantage of maintaining the displayed information on the screen even when the display does not receive power. So, even in case that no power is available from the battery to power the display, it is still possible to identify the serial number or identification number or code of the robotic shuttle, because the low-power display will still maintain the displayed information. So, even in case of a severe malfunction of the system where the display would not longer be powered, the identification number or code of the robotic shuttle still would be readable.

In yet another embodiment, the low-power display displays in addition to the identification information, a limited number of status messages or indicators that reflect the overall health status of the device. While most low-power displays only can display in grayscale, some low-power displays can display a limited number of colors. The availability of colors allows to transmit the overall health status or the health status of particular elements of the robotic shuttle at a glance.

Specific examples and preferred embodiments are set out in the dependent claims. Further advantages and embodiments of the present invention will become apparent from the following description and drawings.

The present invention can be implemented as a computer program product adapted to carry out the steps as set out in the description. The computer executable program code adapted to carry out the steps set out in the description can be stored on a computer readable medium.

### Brief Description of the Drawings

Fig. 1 illustrates in an overview, a layout of a status reporting system of the invention. In this embodiment, the wireless connection means establishes a direct wireless connection with a client device;
Fig. 2 illustrates another embodiment of the status reporting system of the invention. In this embodiment, the wireless connection between the wireless connection means of the system and the client device is established via a shared network infrastructure;
Fig. 3 illustrates a suitable computing system for executing the methods of the invention.

### Detailed Description of Embodiment(s)

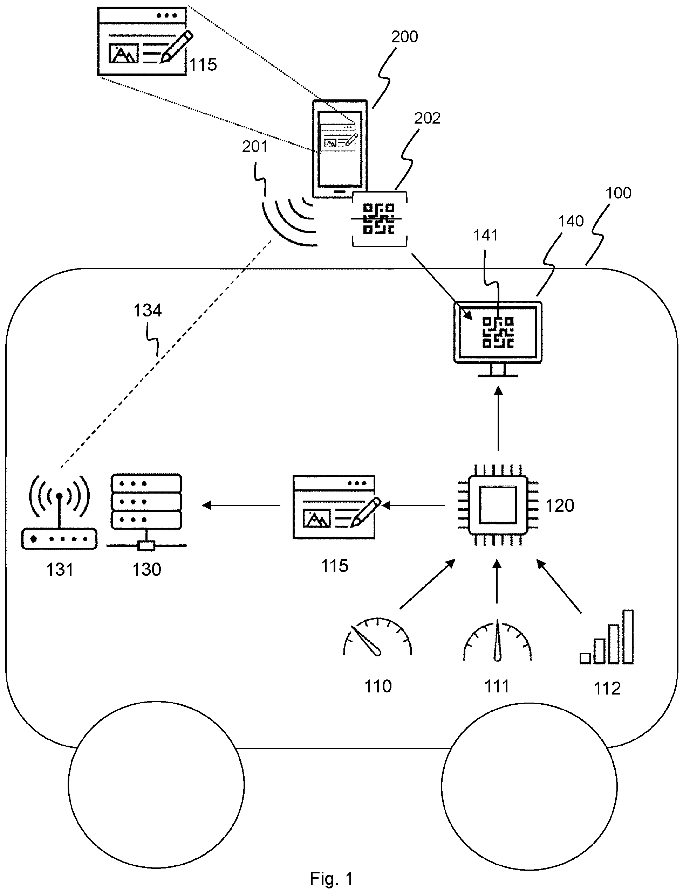

Figure 1 gives an overview of the components that make up the status reporting system of the invention. In the overview, the different components are shown that make up the status reporting system in the context of a robotic shuttle 100. The components that are shown within the boundaries of the drawing of the robotic shuttle 100 find their physical location inside the robotic shuttle.

The status reporting system intends to provide a user the possibility to identify a shuttle to which he has physical access, or at least visual access, in a straightforward way. The status reporting system additionally intends to provide a user the possibility to retrieve a detailed status report on a client device. The shuttle has an integrated display that is visible for a user during normal operation; i.e. the display is mounted into or on the outside cover of the robotic shuttle. The display is configured to at least display the identifier or code of the shuttle, and additionally can display a reference or link to retrieve a more elaborate status report.

In order to gain access to the digital report 115 on his client device 200, a user has to establish a wireless connection 201 between the client device and the wireless connection means 131. To that purpose, the status reporting system will also be able to display a machine-readable code 141 representing a wireless connection path 134. This means that either the display shows the shuttle identifier or code together with the machine-readable code 141 on the low-power display 140, or that it shows the two elements in an alternating way. The machine-readable code can be for instance a QR-code or a bar-code that can be scanned 202 by the client device 200. The wireless connection path 134 both comprises the credentials to establish the wireless connection 201, as well as the URL or network address reference for the digital report 115.

The robotic shuttle 100 of the invention is also known as an automated storage and retrieval system (AS/RS) shuttle, and is a type of robotic technology designed to automate the movement of goods within a warehouse or distribution center. These shuttles are designed for handling small- to medium-sized loads in high-density storage systems. They move within the narrow aisles of a storage rack and are suitable for applications with a high number of SKUs (stock keeping units). Another type of robotic shuttle 100 is an AMR or Autonomous Mobile Robot, which is a type of robotic shuttle that can move freely throughout the warehouse floor. AMRs are not constrained to a fixed track or path and can navigate autonomously using sensors and mapping technology. AMRs are versatile and can be used for various warehouse tasks, including goods transportation and order picking.

These shuttles are used to transport items between storage locations and picking stations, optimizing the efficiency of warehouse operations. Benefits of using robotic warehouse shuttles include increased speed and accuracy in picking and storing goods, reduced labor costs, and improved space utilization within the warehouse. These systems are particularly well-suited for high-density storage environments and industries with high-throughput requirements. They contribute to the overall automation of warehouse processes, helping businesses meet the demands of modern logistics and e-commerce.

The robotic shuttle 100 of the invention consists of a shuttle vehicle with a power system, a control system and a lifting and conveying system. They also may comprise a navigation system, safety features, communication interfaces, sensors and perception systems. The physical shuttle vehicle is a key component, and its design may vary based on the type of shuttle. It typically includes a chassis, wheels or other movement mechanisms, and the necessary mechanisms for lifting and depositing goods. The lifting mechanism may include a platform, forks, or other structures to securely hold and transport items.

The control system is the brain of the robotic shuttle. It coordinates the shuttle's movements, manages the storage and retrieval of goods, and interfaces with the overall warehouse management system. It ensures that multiple shuttles can work together seamlessly. The robotic shuttles are powered by a source such as batteries or another energy storage system. Efficient power management is essential to ensure that the shuttle can operate for extended periods between charges.

A navigation system allows the shuttle to move autonomously within the warehouse. This system may use sensors, cameras, or other technologies to navigate and avoid obstacles. Various sensors, such as proximity sensors, cameras, and lidar, are used to perceive the environment. These sensors help the shuttle navigate, avoid obstacles, and ensure accurate positioning during tasks. Safety is a crucial consideration in automated warehouse systems. Shuttles may be equipped with sensors to detect obstacles, emergency stop mechanisms, and other safety features to prevent accidents and collisions.

Shuttles need to communicate with other components of the warehouse system. This includes communication with the central control system, sensors, and other shuttles. Communication interfaces ensure that information is exchanged efficiently.

Monitoring and diagnostic systems help track the health and performance of the shuttle. This includes sensors 110, 111, 112 and software that can detect issues, predict maintenance needs, and ensure the overall reliability of the system.

The status reporting system of the invention comprises a processor 120 that may be shared with other subsystems of the robotic shuttle, such as the control system mentioned above. The processor 120 executes instructions of a software program that is configured in a first instance to collect, retrieve and analyse readings from different sensors 110, 111, 112 of that reflect the health, performance, and status of the system.

These sensors 110, 111, 112 may for instance monitor the following aspects:
- Motor temperature: monitoring the temperature of motors to detect overheating.
- Motor current and voltage: analyzing the electrical characteristics to assess motor health.
- Encoder feedback: checking the accuracy of motor position and speed through encoder readings.
- Battery voltage: monitoring the voltage level to assess the state of charge.
- Battery temperature: ensuring that the battery operates within the recommended temperature range.
- Charge and discharge rates: tracking the current flow to evaluate battery performance.
- Load weight sensors: monitoring the weight of the carried goods to ensure it falls within the specified limits.
- Load imbalance detection: identifying unevenly distributed loads that may affect shuttle stability.
- Wheel speed and rotation sensors: checking for abnormal wheel behavior or wear.
- Chassis vibration sensors: detecting unusual vibrations that may indicate mechanical issues.
- Communication signal strength: monitoring the strength and reliability of communication links between the shuttle and the control system.

The processor 120 may therefore read the measured values from different sensors and analyse these values to determine whether they exceed normal operating limits. A selection of measurement values and any conclusions of their analysis over time may be compiled into a human readable report or status page. The processor 120 running the software now compiles the results as a digital report 115 into a document format that is stored on a web report hosting means 130. Updates of this digital report 115 may be compiled by the processor at defined intervals, or the creation of an updated digital report may be triggered by a request for the digital report 115 by a client device 200.

The digital report 115 may be compiled in different formats which must be readable by the client device 200. The digital report 115 may be compiled as an html-page, a pdf-file, in docx-format or alike. The digital report 115 may also be compiled into a proprietary or encrypted format that must however be decipherable by the client device 200.

After creation, the digital report 115 is stored into a digital memory of the web report hosting means 130 along with a URL referencing its location for retrieval. The URL referencing the network location of the digital report 115 on the web report hosting means 130 is then encoded by the processor 120 together with the wireless network credentials for establishing the wireless network connection 201 into the machine-readable code 141. The machine-readable code 141 is then displayed on the low-power display 140.

The web report hosting means 130 may be implemented as a webserver, a fileserver or alike. The web report hosting means 130 responds to network requests that match its network address, and in a case where the network request corresponds to the URL of the digital report 115, the web report hosting means responds by serving the digital report 115 to the requesting client device 200.

The web report hosting means 130 has to be accessible by the requesting client device 200 over a wireless network connection 201, which means that both the client device 200 and the web report hosting means 130 must have a wireless connection means 131 or a wireless network interface. Moreover, the wireless network connection has to be configured such that the web report hosting means 130 is accessible for the client device 200, in other words that the are on the same network.

The embodiment of figure 1 illustrates that the wireless connection means 131 of the status reporting system is integrated into the robotic shuttle 100. As explained above, may the wireless connection 201 be stablished as a Wi-Fi connection or for instance as a Bluetooth connection. When a wireless connection 201 is established directly between wireless connection means 131 of the shuttle and the wireless network interface of the client device, this is referred to as a peer-to-peer connection. In a peer-to-peer connection, the only participants of the wireless connection 201 are the two peers.

So, when a user scans 202 the machine-readable code 141 displayed on the display 140 of the status reporting system, the client device 200 will attempt to establish a wireless network connection 201 as a peer-to-peer connection with the shuttles' wireless connection means 131, by using the wireless connection credentials stored in the machine-readable code 141 representing the wireless connection path 134.

As soon as the wireless connection is established, both the client device 140 and the wireless connection means 131 will per definition reside on the same network. From that moment, the client device 200 can send out a network request to retrieve the digital report 115 at the URL that was stored in the machine-readable code 141. An application on the client device 200, for instance a web browser, will send out a network request to the network address of referenced by the URL, such that the application can retrieve the digital report 115 and display it on the screen of the client device.

In another embodiment of the invention, the URL to the digital report is not stored into the machine-readable code 141. In this case, other techniques are applied to direct the application on the client device 200 to the correct network address of the stored digital report 115 on the web report hosting means 130.

In this embodiment, the wireless connection path 134 only comprises the credentials that are needed to establish the wireless connection 201, but no explicit URL that references the network address of the digital report 115 on the web report hosting means 130. The requirement for an explicit URL as part of the wireless connection path can be circumvented by implementing various techniques, such as for instance the setup of a captive portal, or the application of certain DHCP and network router settings. These techniques may be implemented at the level of the wireless connection means of the web report hosting means 131. In these cases, the wireless connection path 134 may be limited to the wireless network credentials only, as any first request by the client device 200 will automatically result in a connection to the specified address of the digital report 115. This implies that the client automatically connects to a predefined URL that is provided in the wireless network configuration.

Alternatively, another way to circumvent the requirement to specify an initial URL may be avoided by using a dedicated app on the client device 200 that automatically connects to a stored default URL to which the client application will connect automatically upon establishing the wireless connection 201.

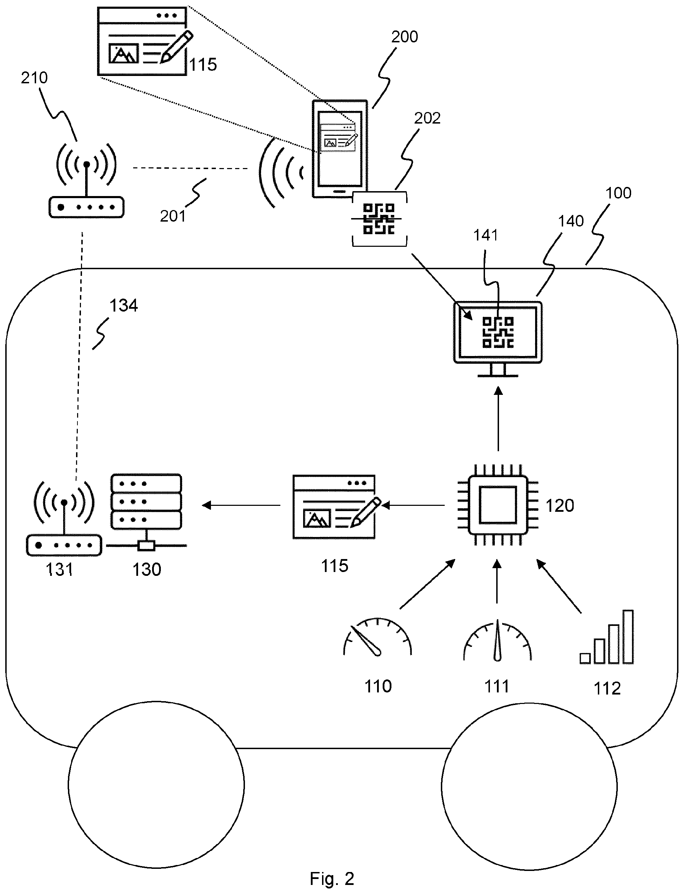

Figure 2 gives an overview of the components of the status reporting system of the invention in another configuration. Essentially, the components of the system are identical to the system depicted in figure 1, but in this configuration the wireless connection means 131 of the system does not connect directly to the client device in a peer-to-peer connection, but rather connects with the client device through a central network router 210. In this scenario it is assumed that both the client device 200 and the wireless connection means 131 are configured to be connected to the same wireless network by means of the central network router 210, and that the client device can connect to the web report hosting means 130 over this wireless network.

In this scenario, the machine-readable code 141 will only comprise the URL with the retrieval location at the web report hosting means 130 of the digital report 115, and not any wireless connection credentials to connect to the wireless network.

Although that the status reporting system of the invention can run on independent or dedicated components, it is also possible to implement the system such that it shares some of the hardware components of the robotic shuttle 100.

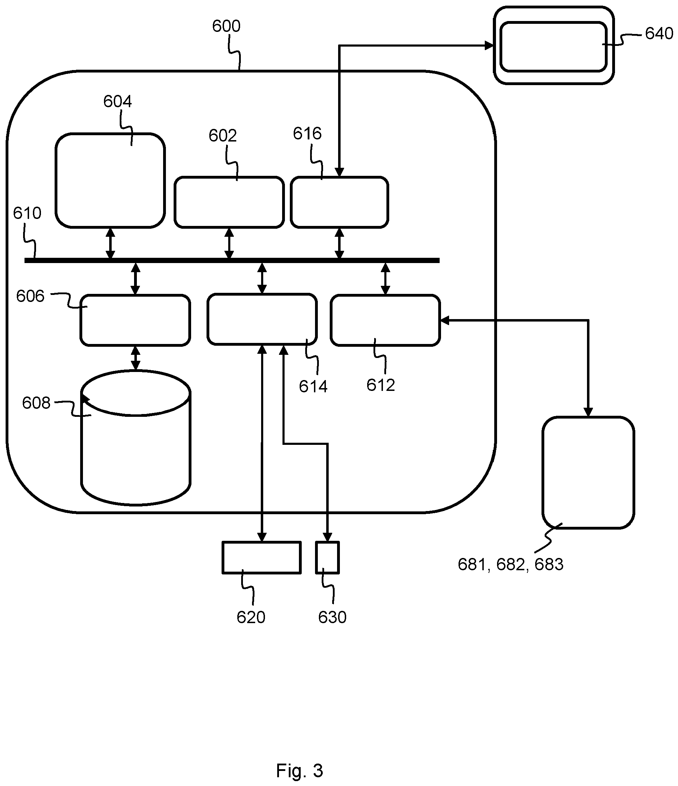

Fig. 3 shows a suitable computing system 600 enabling to implement embodiments of the method for reporting status information of a robotic shuttle in an automated warehouse by displaying a digital report through an application on a screen of a client device according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, ... could be used.

As used in this application, the term "circuitry" may refer to one or more or all of the following: (a) hardware-only circuit implementations such as implementations in only analog and/or digital circuitry and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A status reporting system for a robotic shuttle (100) in an automated warehouse to display a digital report (115) through an application on a screen of a client device (200), said robotic shuttle having a unique identifier, comprising:
- a processor (120), configured to collect and analyse status information (110, 111, 112) of said robotic shuttle (100), to organise said status information into a digital report (115), and to encode a machine-readable code (141) representing a wireless connection path (134) to said digital report, said machine-readable code (141) being readable (202) by said client device (200),
- a wireless connection means (131), configured to establish a wireless connection (201) with said client device (200) for retrieving by said client device said digital report (115) over said wireless connection path (134), and to automatically redirect said application to retrieve said digital report for display on said screen of said client device (200) upon establishing said wireless connection (201),
- a web report hosting means (130), configured to make said digital report (115) available over said wireless connection path (134),
- a low-power display (140), configured to display said machine-readable code (141) representing said wireless connection path (134) for reading by said client device (200).

2. The status reporting system according to claim 1, wherein said wireless connection path comprises credentials of said wireless connection means.

3. The status reporting system according to claim 1, wherein said wireless connection path comprises credentials of said wireless connection means in combination with a uniform resource locator or URL.

4. The status reporting system according to claim 1, wherein said wireless connection path comprises a Bluetooth address.

5. The status reporting system according to any of the preceding claims, wherein said low-power display is further configured to display said machine-readable code representing said wireless connection path for reading by said client device in combination with said unique identifier.

6. The status reporting system according to claim 65 wherein said low-power display is further configured to display status messages.

7. The status reporting system according to any of the preceding claims, and wherein said machine-readable code representing said wireless connection path is a OR-code.

8. Method for reporting status information of a robotic shuttle in an automated warehouse by displaying a digital report through an application on a screen of a client device, the method comprising the steps of:
- collecting and analysing status information of said robotic shuttle
- organising said status information into said digital report,
- encoding a machine-readable code representing a wireless connection path to said digital report said machine-readable code being readable by said client device,
- displaying said machine-readable code displayed on a low-power display,
- scanning by said client device said machine-readable code, decoding said machine-readable code into a wireless connection path comprising credentials to establish a wireless connection between said client device and a wireless connection means,
- establishing said wireless connection using said credentials,
- retrieving said digital report by using said wireless connection path, and displaying said digital report through said application on said screen of said client device.

9. Method according to claim 8, further comprising the steps of displaying said machine-readable code representing said wireless connection path for reading by said client device in combination with said unique identifier.

10. Method according to claim 9, further comprising the steps of displaying display status messages on said low-power display.

11. Method according to any of the preceding claims 8-10, wherein said machine-readable code representing said wireless connection path is a OR-code.
